# EUROPEAN PATENT APPLICATION

(11) **EP 2 018 998 A1**
(43) Date of publication of application: **28.01.2009**
(21) Application number: 08160629.5
(22) Date of filing: 17.07.2008
(51) Int. Cl.: B60R 16/02, B60R 25/00

(54) **Entry system for vehicle**

(30) Priority: 26.07.2007 JP 2007194316
(71) Applicant: Omron Corporation, Kyoto-shi, Kyoto 600-8530 (JP)
(72) Inventor: Ikushima, Yoshihiro, Shiokoji-dori, Shimogyo-ku, Kyoto-shi Kyoto Kyoto 600-8530 (JP); Johzaki, Tsutomu, Shiokoji-dori, Shimogyo-ku, Kyoto-shi Kyoto Kyoto 600-8530 (JP)
(74) Representative: Brykman, Georges

(57) **Abstract**

An engine starting apparatus having the function of adjusting the transmission power of an electronic key to an intensity appropriate for transportation when the vehicle is transported is provided. An on-vehicle control means (key collating ECU) checks the presence of a fuse which is removed when the vehicle is transported before a request signal for ID authentication is transmitted and wirelessly transmits information on the presence of the fuse obtained by the check to an electronic key. Based on the information of presence wirelessly transmitted from the on-vehicle control means, the electronic key sets the transmission power at a first intensity when it is determined that the fuse is present and sets the transmission power at a second intensity when it is determined that the fuse is not present.

## Description

### BACKGROUND OF THE INVENTION

### 1. Field of the Invention

The present invention relates to an engine starting apparatus which utilizes bidirectional radio communication between a portable device (electronic key) and on-vehicle control means to allow an engine of a vehicle to be conveniently started without using a mechanical key.

### 2. Description of Related Art

In the field of vehicles, engine starting apparatus having improved anti-theft performance and user friendliness are recently known, which employ configurations for permitting starting of an engine as a result of ID authentication made through bidirectional radio communication between a portable device (electronic key) and on-vehicle control means and allowing the engine to be easily started through, for example, switch operations to eliminate mechanical keys having low anti-theft performance and inconvenience such as inserting a key into a cylinder and turning the key therein, for example, as disclosed in JP-A-2006-291935, JP-A-2004-74850 and JP-A-2007-76415 (Patent Documents 1 to 3). There is a recent trend toward integration of ID authentication at the time of unlocking doors with what is called a keyless entry system and ID authentication at the time of starting an engine with an engine starting apparatus as described above, although such operations have been carried out separately. In an engine starting apparatus as described above, UHF electric waves have been used for communication from an electronic key to on-vehicle control means, and LF electric waves have been used for communication from the on-vehicle control means to the electronic key. The intensity of electric waves transmitted from an electronic key (i.e., UHF electric waves) as described above is set at an extremely low field intensity defined in a domestic radio law (an intensity for an extremely low power radio station) in the case of a vehicle for domestic use.

For example, related-art engine starting apparatus have had a problem as described below because the value of transmission power of an electronic key remains the same regardless whether the key is in transportation or in other normal situations. Specifically, since each country has different radio laws, vehicles for overseas use include vehicles employing electronic keys which output electric waves having field intensities in violation of a domestic radio law. Therefore, when a vehicle for overseas use is transported from a country, a problem has arisen in that starting of the engine of the vehicle can constitute violation of a domestic radio law.

### SUMMARY OF THE INVENTION

The invention has been made taking such a problem into consideration, and it is an object of the invention to provide an engine starting apparatus having a function which allows the transmission power (field intensity) of an electronic key to be adjusted to an intensity appropriate for transportation when the vehicle is transported.

An engine starting apparatus of the present invention is an engine starting apparatus including an electronic key carried by a user and on-vehicle control means which wirelessly transmits a request signal to the electronic key, collates and authenticates an ID code of the electronic key included in an answer signal wirelessly transmitted from the electronic key as a response to the request signal against an ID code set in itself, and permits starting of an engine of a vehicle when the collation and authentication is successful, wherein
the on-vehicle control means includes at least a power supply line connected to a power supply carried on the vehicle through a fuse, checks the presence of the fuse before the transmission of the request signal, and wirelessly transmits, to the electronic key, information on the presence of the fuse obtained as a result of the check by putting it in the request signal or as a signal separate from the request signal; and
the electronic key sets the transmission power of the wireless signal including the answer signal at a first intensity when it is determined that the fuse is present and sets the transmission power at a second intensity when it is determined that the fuse is not present based on the information on the presence of the fuse wirelessly transmitted from the on-vehicle control means.

The "request signal" does not necessarily include data requesting a response from an electronic key, and what is required is that the signal causes an electronic key to transmit an answer signal in response to the signal. For example, an alternative mode may be employed, in which a signal including only the information on the presence of a fuse may be transmitted as the request signal. Another alternative mode may be employed, in which a wakeup signal for activating an electronic key in a power save mode or in what is called a standby state (a sleep state) to put it in a normal operation mode serves also as the request signal.

The "vehicle" may be a common vehicle such as a four-wheel automobile or a means of transportation equivalent to a common vehicle (e.g., a small aircraft).

In the case of the engine starting apparatus of this request, the transmission power of the electronic key is set at the second intensity when the vehicle is transported because the fuse is not present. In a normal state (in an occasion other than transportation), the transmission power of the electronic key is set at the first intensity because the fuse is present. That is, the transmission power of the electronic key is automatically switched based on the presence or absence of the fuse of the vehicle which is removed at the time of transportation. Therefore, when the second intensity is set at an intensity appropriate for transportation, the transmission power of the electronic key is conveniently adjusted to the intensity appropriate for transportation when the vehicle is transported. For example, even when a vehicle for overseas use employing an electronic key outputting electric waves having a high intensity in violation of a domestic radio law is exported, the domestic radio law can be easily observed by setting the second intensity as very low as compliant to the domestic radio law because the transmission power of the electronic key is thereby automatically adjusted to the very low intensity appropriate for transportation only by removing the fuse.

The engine starting apparatus of the present request allows the transmission power of an electronic key to be automatically switched based on the presence or absence of a fuse of a vehicle which is removed at the time of transportation.

### BRIEF DESCRIPTION OF THE DRAWINGS

Fig. 1 is a circuit diagram of an engine starting apparatus.
Fig. 2 is a diagram for explaining overall operations of the engine starting apparatus.

### DESCRIPTION OF PREFERRED EMBODIMENTS

Embodiments of the invention will now be described based on the drawings.

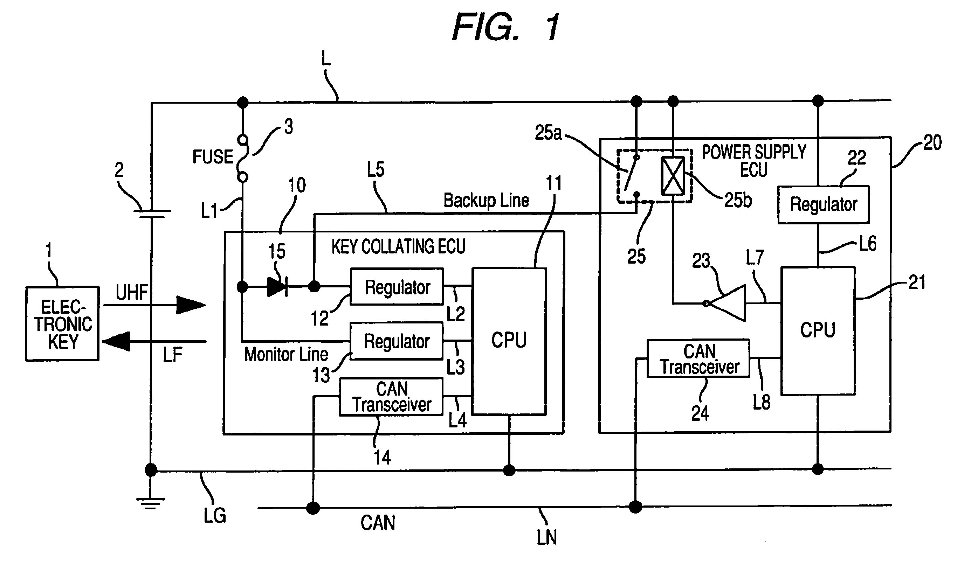

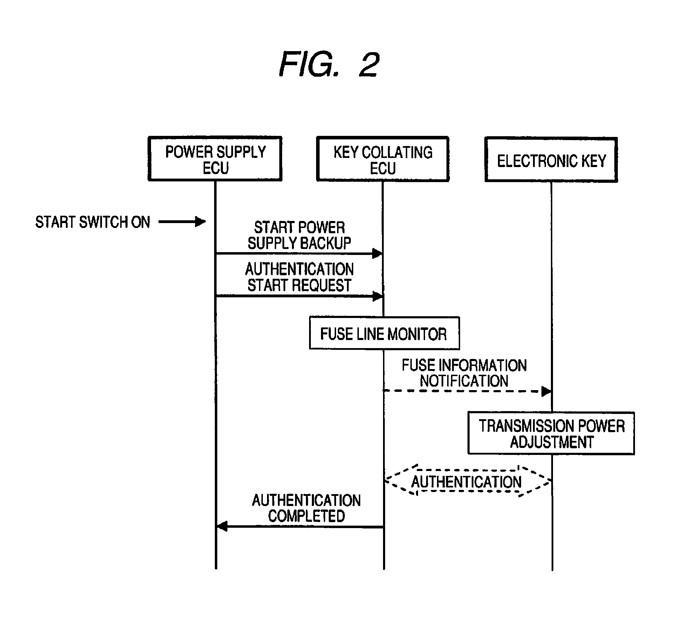

Fig. 1 is a circuit diagram for explaining a configuration of an engine starting apparatus of this example. Fig. 2 is a diagram for explaining functions and operations of the same apparatus.

As shown in Fug, 1, this system includes an electronic key 1 which can be carried by a user and a key collation ECU 10 and power supply ECU 20 as on-vehicle control means (ECU stands for an electronic control unit).

In Fig. 1, reference numeral 2 represents a power supply (battery) of a vehicle, and reference numeral 3 represents a fuse. The fuse 3 is a fuse which is provided on a power supply line normally connected to a vehicle (a power supply line indicated by reference numeral L1 in Fig. 1), and the fuse is normally removed at the time of transportation. In Fig. 1, reference character L represents a power line connected to a positive electrode of the power supply 2, and reference characters LG represent a ground line connected to a negative electrode of the power supply 2 and the ground. The power supply line L1 is a line branching from the power line L.

The electronic key 1 has elements incorporated therein such as an antenna and a reception circuit (not shown) for receiving a request signal from the key collation ECU 10, an antenna and a transmission circuit (not shown) for transmitting an answer signal at a predetermined frequency to the key collating ECU 10, a control circuit (not shown) including a microcomputer (hereinafter referred to as "micom") for performing processes for controlling the electronic key as a whole and storing an ID code and the like, and a built-in battery (not shown).

For example, the control circuit 11 of the electronic key 1 includes writable and erasable non-volatile electronic key side storage means (e.g., an E²PROM which is not shown) as means for storing an ID code and the like.

The micom forming a part of the control circuit is normally in a standby state which is a power saving mode, and it is switched from the standby state to operate in a normal mode (an active state that is not the standby state) as occasion demands.

The control circuit 11 of the electronic key 1 has the function of executing processes and operations as described below according to the setting of an operation program or the like in the micom.

When a (undemodulated) signal having a prescribed frequency and an intensity equal to or higher than a prescribed value corresponding to, for example, a request signal is received, the circuit enters a normal mode to execute a process of receiving this signal at which it is first determined whether the signal is a right request signal or not. Specifically, the received signal (a demodulated binary data string) is analyzed to determine whether data identical to the ID code or the like stored in the electronic key side storage means is included in a predetermined location (e.g., an ID part) of the received signal. If yes, the signal is determined to be a right request signal. When the signal is determined to be a right request signal, an answer signal including the ID code stored in the electronic key side storage means is transmitted the predetermined times. When the signal is not determined to be a right request signal, the circuit 11 returns to the standby state to wait for input of another signal.

The electronic key 1 has the function of setting the transmission power of a radio signal including the answer signal at a first intensity when it is determined that the fuse 3 is present based on information on the presence of the fuse 3 wirelessly transmitted from the key collating ECU 10 and setting the transmission power at a second intensity when it is determined that the fuse 3 is not present. The first intensity is an intensity for a vehicle in normal use (in an occasion other than transportation). The second intensity is an intensity which is preferred for transportation of a vehicle. In the case of a vehicle for overseas use employing an electronic key outputting electric waves having a high intensity in violation of a domestic radio law, the first intensity is set at such a high intensity. On the contrary, the second intensity is set at a very small value that is lower than the first intensity (a value in compliance with the domestic radio law).

As shown in Fig. 1, the key collating ECU 10 includes a control circuit 11, a regulator 12 for power input, a regulator 13 for voltage monitoring, a CAN transceiver 14, a transmission circuit (not shown) for wirelessly transmitting a request signal and the like, a reception circuit (not shown) for receiving radio signals such as an answer signal, an antenna for transmission (not shown), and an antenna for reception (not shown). The antenna for reception is incorporated in, for example, in the unit of the key collating ECU 10, and the antenna for transmission is provided at a location out of the unit, for example, a driver's seat or the like.

The regulator 12 for power input is a regulator connected to a power input line L2 of the control circuit 11 to stabilize a voltage. The power input line L2 (an input side of the regulator 12 for power input) is connected to the power line L through a backup line L5 and a normally-open contact 25a of a relay 25 for backup power supply which will be described later and is also connected to the power line L by a route including a diode 15 and the power supply line L1. The diode 15 is provided to prevent the reversing of a current. The fuse 3 which has already been described is connected in the power supply line L1. When this fuse 3 is removed, the power supply line L1 is broken to reduce a voltage at a monitor line L3 which will be described later to a low potential (e.g., 0 V).

The regulator 13 for voltage monitoring is a regulator connected to the monitor line L3 of the control circuit 11 to stabilize a voltage. The monitor line L3 (an input side of the regulator 13 for voltage monitoring) is connected to the power line L through the power supply line L1.

The CAN transceiver 14 is a communication circuit for what is called CAN (Controller Area Network) serving as an on-vehicle LAN (Local Area Network). In Fig. 1, reference characters LN represent the network of the CAN.

The control circuit 11 includes a micom and, for example, a writable and erasable non-volatile on-vehicle device side storage means (e.g., E²PROM) as a means for storing an ID code and the like. The power consumed by the control circuit is suppressed to a required minimum by, for example, activating it intermittently at a predetermined cycle.

The control circuit 11 has the function of executing processes and operations as described below according to the setting of an operation program or the like in the micom.

For example, the circuit executes the following processes each time it is intermittently activated. First, it determines whether a request for start of electronic key authentication transmitted from the power supply ECU 20 (an authentication start request shown in Fig. 2) has been received through the CAN transceiver 14 and terminates the process if the start request has not been made. If there is a start request, it first reads the voltage on the monitor line L3. It is determined that the fuse is not present if the voltage is equal to or lower than a prescribed value (e.g., 0 V). Otherwise, it is determined that the fuse is present. Next, a signal including the result of the determination on the presence of the fuse (information on the presence of the fuse) is transmitted from the antenna for transmission to the electronic key 1. Thereafter, the control circuit 11 transmits a prescribed request signal from the antenna for transmission to execute authentication of an ID code. That is, it is determined whether a right answer signal has been received during a predetermined reception waiting time that follows the transmission of the request signal. Specifically, it is determined whether a signal including a code coinciding with an ID code or the like stored in the on-vehicle device side storage means in a predetermined position thereof has been received through the antenna for reception. If such a right answer signal is received during the predetermined reception waiting time, a signal indicating the completion of authentication (successful authentication) (or a signal permitting starting of the engine) is output to the CAN. If the reception waiting time passes with no right answer signal received, a signal indicating the completion of authentication (unsuccessful authentication) is output to the CAN.

The power supply ECU 20 has a control circuit 21 including a micom, a regulator 22 for power input, an NOT circuit 23 for controlling a relay, a CAN transceiver 24, and a relay 25 for backup power supply.

The regulator 22 for power input is a regulator connected to a power input line L6 of the control circuit 21 to stabilize a voltage. The power input line L6 (an input side of the regulator 22 for power input) is connected to the power line L.

The NOT circuit 23 for controlling the relay is a circuit connected to a relay driving line L7 of the control circuit 11 to invert a voltage output from the same. The relay driving line L7 (an output side of the NOT circuit 23 for controlling the relay) is connected to one terminal (a terminal on a low potential side) of a coil 25b of the relay 25 for backup power supply.

The CAN transceiver 24 is a communication circuit for the CAN as described above.

The relay 25 for backup power supply includes the coil 25b and a normally-open contact 25a. When a current flows through the coil 25b, the normally-open contact 25a is closed. Another terminal (a terminal on a high potential side) of the coil 25b is connected to the power line L. One terminal of the normally-open contact 25a is connected to the power line L, and another terminal of the normally-open contact 25a is connected to the above-described power input line L2 (the input side of the regulator 12 for power input) through the backup line L5.

The control circuit 21 of the power supply ECU 20 has the function of executing processes and operations as described below according to the setting of an operation program in the micom thereof.

For example, the circuit periodically executes a process of determining the state of operation of an engine staring switch (not shown) operated by a user to start the engine. The engine starting switch is, for example, a switch which is turned on by a user's operation on push-type or rotary-type operating portion provided at the driver's seat or the like. In this example, a signal indicating that the engine starting switch is on is transmitted from another ECU, which is not shown, through the CAN, and the power supply ECU 20 determines the state of operation of the engine starting switch when the power supply ECU 20 receives this signal.

When the power supply ECU 20 determines that the engine starting switch is on, it starts backing up the power supply of the key collating ECU 10 and thereafter transmits a request for start of electronic key authentication to the control circuit 11 of the key colleting ECU 10 through the CAN.

The power supply backup for the key collating ECU 10 is exercised by switching a voltage at the relay driving line L7 (a voltage on the input side of the NOT circuit 23 for controlling the relay) from a low potential to a high potential to energize the coil 25b and to thereby turn the normally-open contact 25a on. When the normally-open contact 25a is turned on, power is supplied to the control circuit 11 of the key collating ECU 10 through the backup line L5 even at the time of transportation when the fuse 3 is removed. The control circuit 11 is thus enabled for the above-described processes and operations.

The power supply ECU 20 receives the above-described signal indicating the completion of authentication from the control circuit 11 of the key collating ECU 10 through the CAN. When the authentication is successful, it exercises control to allow the engine of the vehicle to be started.

A description will now be made with reference to Fig. 2 on overall operations of the engine starting apparatus having the above-described configuration performed when the engine is started.

As shown in Fig. 2, when the engine starting switch is turned on by a user (Start Switch ON), the power supply ECU 20 determines the same. The power supply ECU 20 starts power supply backup and thereafter transmits a request for start of key authentication (authentication start request) to the key collating ECU 10. Then, the key collating ECU 10 executes a fuse line monitoring process. Specifically, it monitors the voltage on the monitor line L3. It is determined that the use is not present if the voltage is equal to or lower than a prescribed value (e.g., 0V). Otherwise, it is determined that the fuse is present. Then, the key collating ECU 10 wirelessly transmits a signal including the result of the determination on the presence of the fuse (information on the presence of the fuse) to the electronic key 1 (FUSE information notification). When the received signal includes information indicating that the fuse is not present, the transmission power of the electronic key 1 is set at the second intensity. When the signal includes information indicating that the fuse is present, the transmission power is set at the first intensity.

Thereafter, the control circuit 11 of the key collating ECU 10 transmits a prescribed request signal to execute authentication of an ID code. At this time, the intensity of electric waves of an answer signal returned from the electronic key 1 is the first intensity when the fuse is present, and the intensity is the second intensity when the fuse is not present. Thus, the intensity is switched each time depending on whether the fuse 3 is present or not. Then, the key collating ECU 10 outputs a signal indicating the completion of authentication (successful authentication) (i.e., a signal permitting starting of the engine) to the CAN if the result of the authentication is successful (i.e., if a right answer signal is received). If not successful (i.e., if the reception waiting time passes with no right answer signal received), a signal indicating the completion of authentication (unsuccessful authentication) (i.e., a signal inhibiting the starting of the engine) is output to the CAN. The power supply ECU 20 receives the signal indicating the completion of authentication, through the CAN, from the key collating ECU 10 and exercises control to start the engine in the case of successful authentication.

Thus, a user who carries a right electronic key 1 can easily start the engine without using a mechanical key only by, for example, operating a push-type or rotary-type operating portion provided at the driver's seat or the like.

As described above, in the case of the engine starting apparatus of this example, the transmission power of the electronic key 1 is set at the second intensity when the vehicle is transported because the fuse 3 is removed and is therefore absent. In a normal state (in an occasion other than transportation), the transmission power of the electronic key 1 is set at the first intensity because the fuse 3 is present. Specifically, the transmission power of the electronic key 1 is automatically switched based on the presence or absence of the fuse 3 of the vehicle which is removed at the time of transportation. Therefore, when the second intensity is set at an intensity appropriate for transportation, the transmission power of the electronic key is conveniently adjusted to the intensity appropriate for transportation when the vehicle is transported. For example, even when a vehicle for overseas use employing an electronic key 1 outputting electric waves having a high intensity in violation of a domestic radio law (a vehicle for which the first intensity is to be set at a high intensity) is exported, the domestic radio law can be easily observed by setting the second intensity as very low as compliant to the domestic radio law because the transmission power of the electronic key is thereby automatically adjusted to the very low intensity appropriate for transportation only by removing the fuse.

The invention is not limited to the above-described exemplary mode, and various medications and applications may be made.

For example, the information on the presence of the fuse may be transmitted as the request signal.

And, referring to the relationship between the magnitudes of the first and second intensities, it is not essential that the second intensity is lower. In case that there is a need for setting the transmission power of the electronic key at an intensity higher than that in a normal state at the time of transportation when the fuse is removed, the second intensity must be set higher than the first intensity, and such a mode is included in the scope of the invention of the present request.

The electronic key and the on-vehicle control means of the invention of the present request (the electronic key 1 and the key collating ECU 10 in the above-described exemplary mode) may have configurations in which they serve as a portable device and an on-vehicle device of a system other than an engine starting system (e.g., a keyless entry system).

Further, not only the intensity of electric waves of an answer signal returned from the electronic key, but also the intensity of electric waves of a signal transmitted from the on-vehicle control means to the electronic key may be changed depending on the presence of the fuse.

Furthermore, an embodiment is possible, in which the power supply line connected from the power supply through the fuse (the power supply line L1 having the fuse 3 in Fig. 1) is replaced with a power supply line connected from the power supply through switching means (a switch, relay or diode). In this case, the on-vehicle control means may check whether the switching means is closed (conducting) or open (not conducting) instead of checking the presence of a fuse and may exercise control to change the intensity of electric waves of signals depending on the result.

## Claims

1. An engine starting apparatus comprising an electronic key carried by a user and on-vehicle control means which wirelessly transmits a request signal to the electronic key, collates and authenticates an ID code of the electronic key included in an answer signal wirelessly transmitted from the electronic key as a response to the request signal against an ID code set in itself, and permits starting of an engine of a vehicle when the collation and authentication is successful, wherein
the on-vehicle control means includes at least a power supply line connected to a power supply carried on the vehicle through a fuse, checks the presence of the fuse before the transmission of the request signal, and wirelessly transmits, to the electronic key, information on the presence of the fuse obtained as a result of the check by putting it in the request signal or as a signal separate from the request signal; and
the electronic key sets the transmission power of the wireless signal including the answer signal at a first intensity when it is determined that the fuse is present and sets the transmission power at a second intensity when it is determined that the fuse is not present based on the information on the presence of the fuse wirelessly transmitted from the on-vehicle control means.
